# EUROPÄISCHE PATENTSCHRIFT

(11) **EP 4 055 453 B1**
(45) Veröffentlichungstag und Bekanntmachung des Hinweises auf die Patenterteilung: **29.04.2026**
(21) Anmeldenummer: 20803767.1
(22) Anmeldetag: 04.11.2020
(51) Int. Cl.: G05B 19/418, B23P 21/00, B62D 65/18

(54) **FAHRZEUG FÜR EIN FÖRDERSYSTEM UND VERFAHREN ZUM GLEICHZEITIGEN TRANSPORT VON WERKSTÜCKEN UND WERKERN**
VEHICLE FOR A CONVEYOR SYSTEM AND METHOD FOR SIMULTANEOUSLY TRANSPORTING WORKPIECES AND WORKERS
VÉHICULE UN SYSTÈME DE TRANSPORT ET PROCÉDÉ POUR TRANSPORTER SIMULTANÉMENT DES PIÈCES ET DES TRAVAILLEURS

(30) Priorität: 05.11.2019 DE 102019129801
(43) Veröffentlichungstag der Anmeldung: 14.09.2022
(73) Patentinhaber: Eisenmann GmbH, 71032 Böblingen (DE)
(72) Erfinder: JARSCH, Stefan, 71111 Waldenbuch (DE)
(74) Vertreter: Ostertag & Partner Patentanwälte mbB
(86) Internationale Anmeldenummer: PCT/EP2020/081009
(87) Internationale Veröffentlichungsnummer: WO 2021/089650

(56) Entgegenhaltungen:
- DE-A1- 102017 103 931
- STIMMING CHRISTIAN ET AL: "Multi-level on-board data fusion for 2D safety enhanced by 3D perception for AGVs", 2015 IEEE INTERNATIONAL CONFERENCE ON INTELLIGENT COMPUTER COMMUNICATION AND PROCESSING (ICCP), IEEE, 3 September 2015 (2015-09-03), pages 239 - 244, XP032803453, DOI: 10.1109/ICCP.2015.7312636
- REAL-MORENO OSCAR ET AL: "Accuracy improvement in 3D laser scanner based on dynamic triangulation for autonomous navigation system", 2017 IEEE 26TH INTERNATIONAL SYMPOSIUM ON INDUSTRIAL ELECTRONICS (ISIE), IEEE, 19 June 2017 (2017-06-19), pages 1602 - 1608, XP033136733, DOI: 10.1109/ISIE.2017.8001486

## Beschreibung

### HINTERGRUND DER ERFINDUNG

### 1. Gebiet der Erfindung

Die Erfindung betrifft ein Fahrzeug für ein Fördersystem zum gleichzeitigen Transport von Werkstücken und Werkern. Derartige Fahrzeugsysteme bzw. Fördersysteme werden insbesondere bei der Endmontage von Kraftfahrzeugen, großen Haushaltsgeräten oder von Maschinen eingesetzt, die in großen Stückzahlen hergestellt werden.

### 2. Beschreibung des Standes der Technik

Bei der Endmontage von Werkstücken werden häufig Fördersysteme eingesetzt, bei denen die Werker über einen längeren Zeitraum gemeinsam mit den Werkstücken transportiert werden können. Auf diese Weise ist es möglich, dass die Werker Arbeiten an Werkstücken vornehmen, ohne neben den Werkstücken herlaufen zu müssen.

Die Fahrzeuge bei diesen bekannten Fördersystemen weisen eine Werkstückaufnahme zur Befestigung des Werkstücks, eine für die Werker begehbare Montageplattform und üblicherweise einen eigenen Antrieb auf, der dazu eingerichtet ist, das Fahrzeug unabhängig von anderen Fahrzeugen des Fördersystems anzutreiben. Derartige Fahrzeuge weisen außerdem heutzutage oft einen berührungslosen Fahrwegsensor zur Wegfindung des Fahrzeugs und eine Steuereinrichtung zur Ansteuerung des Antriebs, unter anderem in Abhängigkeit von einem Signal des Fahrwegsensors auf. Während bestimmter Fertigungsschritte ist es vorteilhaft, wenn derartige Fahrzeuge einen Fahrverband oder Pulk bilden, während sie Werker gemeinsam mit den Werkstücken transportieren. In der DE 11 2017 113 931 A1 ist beispielsweise ein gattungsgemäßes Fördersystem beschrieben. An den Front- und Seitenflächen der Montageplattform sind Sensoren angeordnet, die der Orientierung und/oder der Kollisionsvermeidung dienen. Die Sensoren sind beispielsweise als Laserscanner ausgebildet und dienen dazu, einen Bereich um die Fahrzeuge - den Sicherheitsabstand - zu überwachen. Der Sicherheitsabstand ist dabei so gewählt, dass ein Fahrzeug innerhalb des Sicherheitsabstands vor einem möglicherweise plötzlich auftauchenden Hindernis mit ausreichendem Abstand zum Stehen gebracht werden kann. Die Oberseite der Montageplattform ist von einem berührungsempfindlichen Bodenbelag bedeckt, mit dem sich erfassen lässt, ob sich Werker auf der Montageplattform befinden.

Bei der Bildung eines Fahrverbands bzw. Pulks hat es sich als problematisch herausgestellt, dass der von dem Laserscanner zur Hinderniserkennung vorgesehene Sicherheitsabstand eingehalten werden muss. Das Gleiche gilt für eine Annäherung des Fahrzeugs an beispielsweise stationäre Einrichtungen. Momentan kann dies nur in speziell abgesicherten Bereichen erfolgen, da das Fahrzeug dann nicht selbst erkennen kann, ob eine Kollision droht oder ob das Unterschreiten des Sicherheitsabstandes gewollt ist.

### ZUSAMMENFASSUNG DER ERFINDUNG

Es ist eine Aufgabe der Erfindung, ein Fahrzeug sowie ein Verfahren zum gleichzeitigen Transport von Werkstücken und Werkern anzugeben, bei welchem die oben genannten Nachteile zumindest teilweise vermieden werden und bei dem insbesondere einfach ein Fahrverband, vorzugsweise ohne stationäre Sicherheitseinrichtungen, gebildet werden kann.

Diese Aufgabe wird durch ein Fahrzeug und ein Fördersystem zum gleichzeitigen Transport von Werkstücken und Werkern gelöst, wobei das Fahrzeug eine Werkstückaufnahme, eine für Werker begehbare Montageplattform, einen eigenen Antrieb, der dazu eingerichtet ist das Fahrzeug unabhängig von anderen Fahrzeugen des Fördersystems anzutreiben, einen berührungslosen Fahrwegsensor zur Wegfindung des Fahrzeugs und eine Steuereinrichtung zur Steuerung des Antriebs unter anderem in Abhängigkeit von einem Signal des Fahrwegsensors aufweist.

Erfindungsgemäß ist vorgesehen, dass das Fahrzeug einen berührungslosen Plattformsensor zur Überwachung der Montageplattform aufweist, wobei der Plattformsensor dazu eingerichtet ist, zumindest zeitweise alternativ die Überwachung der Fahrsituation des Fahrzeugs zu übernehmen oder zumindest zeitweise zusätzlich die Überwachung der Fahrsituation des Fahrzeugs zu unterstützen.

Es ist also erfindungsgemäß möglich, beispielsweise bei einer Annäherung des Fahrzeugs an ein zweites Fahrzeug oder an eine andere dynamische oder stationäre Störkontur eine Überwachung der Fahrsituation des Fahrzeugs bis zu einem bestimmten nicht zu unterschreitenden Sicherheitsabstand mit dem berührungslosen Fahrwegsensor zu gewährleisten und, sobald dieser Sicherheitsabstand unterschritten wird, zusätzlich oder alternativ die Überwachung der Fahrsituation mit dem berührungslosen Plattformsensor durchzuführen. Während der berührungslose Plattformsensor eigentlich zur Überwachung der Montageplattform dient und die Anwesenheit von Werkern in dem von ihm überwachten Bereich feststellt, ist er erfindungsgemäß dazu ausgelegt, auch eine Überwachung der Fahrsituation des gesamten Fahrzeugs durchzuführen. Dies ist beispielsweise dann notwendig, wenn das Fahrzeug sich einem anderen Fahrzeug oder einer beliebigen anderen Störkontur näher als dem eigentlich vorgesehenen Sicherheitsabstand nähern muss. Wird dieser Sicherheitsabstand unterschritten, ist nicht mehr gewährleistet, dass das Fahrzeug bei der gegebenen Geschwindigkeit anhalten und so in jedem Fall eine Kollision vermeiden kann. Um trotzdem einen Schutz vor einer Kollision, insbesondere einen Personenschutz, für den verbliebenen Abstand zwischen Fahrzeug und dem weiteren Fahrzeug oder der Störkontur zu gewährleisten, übernimmt der Plattformsensor die Überwachung der Fahrsituation. Gleiches gilt bei einem Auflösen eines Fahrverbandes oder bei einem Entfernen von einer Störkontur. Hier kann es beispielsweise von Relevanz sein, wenn sich zwei Fahrzeuge mit einer höheren Geschwindigkeit bewegen und eine Person in den sich vergrößernden Abstand zwischen den beiden Fahrzeugen gerät. Auch in diesem Fall kann es angezeigt sein, die Fahrsituation zu überwachen und gegebenenfalls eine Bremsung oder ein Warnsignal auszulösen.

Bei einer bevorzugten Ausführungsform ist vorgesehen, dass das Übernehmen der Überwachung der Fahrsituation oder das Unterstützen der Überwachung der Fahrsituation durch den berührungslosen Plattformsensor bei Unterschreiten des Sicherheitsabstandes erfolgt. Dabei kann die Übernahme oder die Unterstützung bereits in einem adäquaten Zeitabstand vor dem voraussichtlichen Unterschreiten des Sicherheitsabstandes erfolgen, um bei Unterschreiten des Sicherheitsabstandes bereits die (zusätzliche) Überwachung der Fahrsituation durch den Plattformsensor zur Verfügung zu haben.

Wie bereits erläutert kann die Überwachung der Fahrsituation insbesondere eine Kollisionsvermeidung, insbesondere für den Personenschutz, umfassen. Es können noch andere fahrsituationsrelevante Aspekte durch den Plattformsensor übernommen bzw. unterstützt werden. Beispielsweise ist es denkbar, dass bei einem Annähern des Fahrzeugs an ein zweites Fahrzeug oder eine andere Störkontur Bereiche durch den Fahrwegsensor schlechter zu erfassen sind oder die Genauigkeit des Fahrwegsensors durch den Plattformsensor verbessert werden kann. Besonders bevorzugt ist es aber, den Personenschutz an den Plattformsensor zu übergeben oder zusätzlich durch diesen durchzuführen. Unter Personenschutz wird vorliegend verstanden, die Fahrsituation des Fahrzeugs so zu kontrollieren, dass eine Gefährdung von Werkern oder anderen Personen, die sich im Bereich des Fahrzeugs aufhalten, ausgeschlossen werden kann. Die im Rahmen des Personenschutzes durchzuführenden Abläufe können beispielsweise die Kontrolle der Geschwindigkeit oder der Richtung des Fahrzeugs, das Ausgeben von akustischen, optischen oder elektrischen Signalen oder andere Sicherheitsmaßnahmen umfassen.

Bei einer Weiterentwicklung der Erfindung kann vorgesehen sein, dass der Plattformsensor dazu eingerichtet ist, seine Reichweite dynamisch oder in Stufen anzupassen. Beispielsweise kann es vorgesehen sein, dass der Plattformsensor regulär den Laufbereich an der Montageplattform, für den er eingerichtet ist, überwacht. Im Rahmen einer Annäherung an ein weiteres Fahrzeug oder eine andere statische oder dynamische Störkontur, die in den für den Fahrwegsensor vorgesehenen Sicherheitsabstand eindringen soll, kann der Plattformsensor seine Reichweite generell oder speziell im Bereich der zu erwartenden Annäherung vergrößern. Ist das Fahrzeug an das weitere Fahrzeug oder die Störkontur angedockt - d.h., ist der minimale gewünschte Abstand (der auch 0 betragen kann) erreicht - kann der Plattformsensor seine Reichweite so einstellen, dass der verbleibende minimale Abstand zumindest zur Hälfte abgedeckt ist. Es kann auch vorgesehen sein, dass der eine Plattformsensor des einen Fahrzeugs den verbleibenden Restabstand alleine abdeckt und der entsprechend andere Plattformsensor des anderen Fahrzeugs seine Reichweite soweit reduziert, dass keine doppelte Abdeckung entsteht. Gegebenenfalls kann auch eine doppelte Abdeckung gewünscht sein.

Die beschriebene dynamische Anpassung des Plattformsensors kann auch für den Fahrwegsensor durchgeführt werden.

Bislang war es notwendig, Störkonturen, die bei einer Vorbeifahrt eines Fahrzeugs ein Schutzfeld - also einen durch den Sicherheitsabstand definierten Bereich - verletzen, per Software aktiv, z. B. ortsabhängig auszublenden. Unvorhergesehene, dynamische Störkonturen führten zu einem Not-Halt. Diese Not-Halt-Situation musste durch manuellen Eingriff, beispielsweise durch Beseitigen der Störkontur oder Versetzen des Fahrzeugs behoben werden. Ein Ausblenden der Störkontur (Muting) musste so erfolgen, dass ein "versehentliches" Ausblenden von Personen sicher ausgeschlossen ist.

Stattdessen wird nun vorgeschlagen, das Schutzfeld des Fahrwegsensors abhängig von der Ist-Geschwindigkeit des Fahrzeugs und dem damit verbundenen Anhalteweg stufenweise zu vergrößern bzw. verkleinern.

Vor Schutzfeldern können Warnfelder vorgelagert sein. Wenn ein Warnfeld eine Störkontur erfasst, leitet es die Reduzierung der Fahrgeschwindigkeit auf die nächstkleinere Stufe ein. Das Warnfeld ist so bemessen, dass die kleinere Geschwindigkeit erreicht ist, bevor das aktuelle Schutzfeld verletzt wird und einen Not-Halt auslösen würde.

Dadurch wird das Fahrzeug bei Annäherung an eine Störkontur Stufe für Stufe herunterbremsen bis zur kleinsten Geschwindigkeit mit dem kleinsten Schutzfeld, ohne dass eine Not-Halt-Bedingung ausgelöst wird und das Fahrzeug an der Störkontur stehen bleibt. Trotzdem bleibt während der ganzen Zeit die Personenschutzfunktion des Fahrwegsensors erhalten. Wenn die Geschwindigkeit nicht wie vorgesehen reduziert wird, leitet das zugehörige Schutzfeld den Not-Halt ein.

Bei Annäherung an einen Engpass (insbesondere bei Kurvenfahrt, wenn das Schutzfeld über die Kurve hinausragt) wird das Fahrzeug also selbständig seine Geschwindigkeit reduzieren, fährt mit den reduzierten Schutz- und Warnfeldern an der Störkontur vorbei und danach, wenn die Warnfelder frei geworden sind, beschleunigt es wieder auf die ursprüngliche Sollgeschwindigkeit. Durch dieses Verfahren sind keine weiteren Eingriffe und kein Muting (ereignis- oder ortsabhängig gesteuertes Ausblenden von Störkonturen) erforderlich. Das Festfahren an Störkonturen, die nicht in den Fahrweg hineinragen, ist ausgeschlossen. Das Verfahren funktioniert immer und überall und ist nicht an bestimmte Orte oder Situationen gebunden.

Bevorzugt arbeiten der Wegsensor und der Plattformsensor in der Horizontalen. Dies bedeutet, dass insbesondere bei einer Ausbildung des Fahrwegsensors und/oder des Plattformsensors als Scanner die Ausrichtung des erfassten Scanbereichs im Wesentlichen horizontal ist. Insbesondere bei dem Fahrwegsensor muss sichergestellt sein, dass beispielsweise eine am Boden liegende bewusstlose Person von diesem erfasst werden kann.

Bevorzugt ist der Erfassungsraum des Plattformsensors so einrichtbar, dass er um einen Sicherheitsabstand über die Montageplattform hinausgeht. Bevorzugt korreliert der Sicherheitsabstand, um den der Erfassungsraum des Plattformsensors über die Montageplattform hinausragt, mit dem minimalen Sicherheitsabstand des Fahrwegsensors, d.h. er deckt sich mit diesem oder ist etwas größer als dieser. Auf diese Weise kann eine Übergabe der Sicherheitsfunktion von dem Fahrwerksensor auf den Plattformsensor und umgekehrt erfolgen, ohne dass eine Lücke im Schutzbereich entsteht.

Bevorzugt ist der Fahrwegsensor so ausgelegt, dass ein liegender zylindrischer Körper von 200 mm Durchmesser oder größer erkennbar ist. Dazu kann der Fahrwegsensor beispielsweise als linienförmiger Scanner ausgebildet sein, der die Breite des Fahrzeugs oder etwas darüber hinaus und im Wesentlichen den horizontal den vor dem Fahrzeug liegenden Bereich erfasst. Dazu kann der Fahrwegsensor beispielsweise auf einer Höhe von 150 mm arbeiten. Alternativ kann die Ausrichtung des Fahrwegsensors auch nach untern geneigt sein. Dies reduziert die maximale Reichweite des Fahrwegsensors und erschwert die Auswertung des Sensorsignals zur Erfassung möglicher Hindernisse, bietet aber unter Umständen eine verbesserte Genauigkeit im Nahbereich.

Bevorzugt ist es, wenn der Plattformsensor einen Bereich oberhalb des Fahrwegsensors abdeckt. Oberhalb kann bedeuten, dass die Ebene, innerhalb derer der Fahrwegsensor arbeitet, unterhalb der Ebene liegt, innerhalb welcher der Plattformsensor arbeitet. Der vertikale Abstand zwischen der Erfassungsebene des Plattformsensors und der Erfassungsebene des Fahrwegsensors kann beispielsweise zwischen 50 mm und 250 mm, bevorzugt zwischen 110 mm und 200 mm, besonders bevorzugt bei 150 mm liegen. {Zylindrischer Körper von 200 mm Höhe, Fahrwegsensor befindet sich auf 150 mm Höhe, Montageplattformebene darf nicht mehr als 250 mm betragen. Plattformsensor ist 50 mm höher montiert = > Abstand zwischen Fahrwegsensor und Plattformsensor gleich 150 mm}

Die Aufgabe wird auch durch ein Fördersystem mit zumindest zwei Fahrzeugen nach einem der vorhergehenden Beispiele gelöst.

Des Weiteren wird die Aufgabe auch durch ein Verfahren zur Steuerung eines solchen Fahrzeugs gelöst, das die folgenden Schritte aufweist: Überwachen der Fahrsituation des Fahrzeugs mit dem Fahrwegsensor; Annähern an ein zweites Fahrzeug für eine Pulkbildung, Entfernen von bzw. Vergrößern des Abstands zu einem zweiten Fahrzeug für ein Ablösen aus einem Pulk oder Annähern des Fahrzeugs an eine stationäre oder bewegliche Störkontur; sobald der Sicherheitsabstand zu dem zweiten Fahrzeug oder der Störkontur unterschritten ist bzw. solange sich das zweite Fahrzeug oder die Störkontur innerhalb des Sicherheitsabstands befindet, alternativ oder zusätzlich Durchführen einer Überwachung der Fahrsituation mit dem Plattformsensor.

Auf diese Weise werden die Vorteile der Erfindung auch im Rahmen eines Verfahrens realisiert.

Vorteilhaft ist bei dem Verfahren vorgesehen, dass das Überwachen der Fahrsituation eine Kollisionsvermeidung, insbesondere für einen Personenschutz, umfasst.

Vorteilhaft kann vorgesehen sein, dass der Plattformsensor während einer Annäherung an ein weiteres Fahrzeug oder eine Störkontur bzw. während eines Entfernens von einem zweiten Fahrzeug oder einer Störkontur seine Reichweite dynamisch oder in Stufen anpasst.

Bei einer besonders vorteilhaften Ausführungsform ist vorgesehen, dass in einem gebildeten Pulk aus beispielsweise zwei Fahrzeugen der Fahrwegsensor eines Fahrzeugs die Abstandsregelung zu einem zweiten Fahrzeug übernimmt.

Besonders bevorzugt ist es, wenn der Plattformsensor die Überwachung der Montageplattform sowie eines Andockbereichs zu einem zweiten Fahrzeug übernimmt.

Vorteilhaft ist es, wenn der von dem Fahrwegsensor oder/und dem Plattformsensor erfasste Bereich in seiner Ausgestaltung von der aktuellen Fahrgeschwindigkeit, der Position, dem Beladungszustand eines Fahrzeugs oder/und dem Abstand zu einem weiteren Fahrzeug abhängen.

Mit der vorliegenden Erfindung kann ein fahrerloses Transportsystem realisiert werden, bei dem sich die einzelnen Fahrzeuge bis zur Berührung an andere Fahrzeuge oder geeignete stationäre Einrichtungen annähern können. Die Absicherung kommt ohne ortsfeste Schutzeinrichtungen aus und kann insbesondere zwischen bewegten Objekten wie beispielsweise einem Andocken mehrerer Fahrzeuge zu einem Verbund, realisiert werden. Die Absicherung der einzelnen Fahrzeuge funktioniert autark ohne eine ansonsten notwendige sichere Kommunikation mit stationären Einrichtungen oder anderen Fahrzeugen. Unabhängig vom Ort oder dem Anlagenlayout wird sicher erkannt, wenn sich Personen auf dem Fahrzeug befinden und gefahrbringende Bewegungen des Fahrzeugs werden unterbunden. Dies kann dadurch realisiert werden, dass bis zum Unterschreiten eines Sicherheitsabstandes mit einem ersten Scanner sichergestellt wird, dass sich keine Person oder Gegenstand im Gefahrenbereich befindet. Mit Unterschreiten des Sicherheitsabstandes wird der erste Scanner deaktiviert und ein zweiter Scanner überwacht die Umgebung stellt sicher dass keine Person in den Gefahrenbereich einträgt.

Die elektrische bzw. regelungstechnische Kopplung einzelner Fahrzeuge zu einem Verbund kann wie folgt realisiert werden:
Ein erstes Fahrzeug fährt in einem Verbund mit der Geschwindigkeit des Pulks bzw. Verbundes.

Jedes nachfolgende Fahrzeug regelt seinen Abstand zum unmittelbar vorausfahrenden Fahrzeug. Eine Kommunikation zwischen den Fahrzeugen oder zu einer zentralen Anlagensteuerung ist dazu nicht notwendig. Es kann eine Kommunikation geben, um Aktionen wie beispielsweise Anhaltevorgänge vorausschauend oder koordiniert einzuleiten.

Zwischen den Fahrzeugen kann ein bestimmtes Spaltmaß definiert sein. Eine Änderung des Spaltmaßes wird messtechnisch als Regelabweichung erfasst. Die Abstandsmessung kann mit einem ersten Scanner, also beispielsweise einem Fahrwegscanner, erfolgen. Der Spalt wird aus Sicherheitsgründen mit einer flexiblen Abdeckung mechanisch verschlossen. Die maximale Regelabweichung wird nach oben und unten begrenzt.

Die Regelung überlagert die Geschwindigkeit des Pulks. Bei zu großem Abstand wird eine Aufholgeschwindigkeit hinzuaddiert und bei zu kleinem Abstand eine Verzögerungsgeschwindigkeit subtrahiert. Um ein Aufschaukeln der Regelung bei einem Verbund mit vielen Fahrzeugen (Kolonnenfahrt) zu vermeiden, wird der Stellbereich der Regelung eng begrenzt und der Regler kann beispielsweise als Dreipunkt-Schritt-Regler oder als P-Regler ausgeführt sein.

Wenn das minimale Spaltmaß unterschritten wird wie beispielsweise bei einem Stau, bremst das Fahrzeug selbstständig bis zum Stillstand ab. Sobald ein beliebiges Fahrzeug im Verbund durch einen solchen Nothalt, Betriebshalt oder eine Störung stehen bleibt, laufen die nachfolgenden Fahrzeuge auf und bleiben ebenfalls selbstständig stehen. Die vorausfahrenden Fahrzeuge fahren normal weiter.

Wenn das maximale Spaltmaß zum vorausfahrenden Fahrzeug überschritten wird (Abriss), wird die Abstandsregelung außer Kraft gesetzt. Das Fahrzeug fährt mit der Geschwindigkeit des Pulks und übernimmt die Rolle des ersten Fahrzeugs in einem Verbund. Die Lücke zum vorausfahrenden Fahrzeug wird über einen zweiten Scanner, wie beispielsweise den Plattformscanner, abgesichert. Die Lücke schließt sich automatisch, wenn die vorausfahrenden Fahrzeuge betriebsbedingt anhalten. Im Unterschreiten des maximalen Spaltmaßes wird die Abstandsregelung automatisch wieder aktiv und der Verbund wiederhergestellt.

Vereinzelung: Wenn das erste Fahrzeug aus dem Verbund schnell abgezogen wird, kann das zweite Fahrzeug auch mit einer Aufholgeschwindigkeit nicht folgen. Die Lücke wird zu groß das zweite Fahrzeug übernimmt automatisch die Führung des Verbundes mit der Pulkgeschwindigkeit.

Andocken: Ein neues Fahrzeug wird von hinten mit Andockgeschwindigkeit an das letzte Fahrzeug im Verbund angenähert. Mit Erreichen des maximalen Spaltmaßes treten die Abstandsregelungen in Kraft und der Verbund ist hergestellt. Wenn das Fahrzeug innerhalb einer festgelegten Andockstrecke nicht nahe genug zum vorausfahrenden Fahrzeug aufschließen kann, fährt es selbständig als erstes Fahrzeug eines neuen Verbunds mit der Pulkgeschwindigkeit weiter.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Draufsicht auf ein erfindungsgemäßes Fördersystem, bei dem mehrere Fahrzeuge in einem Pulk unterschiedliche Bearbeitungsstationen oder -bereiche anfahren;
- Figur 2: eine perspektivische Ansicht des Pulks der Figur 1;
- Figur 3: eine perspektivische Ansicht eines erfindungsgemäßen Fahrzeugs;
- Figur 4: eine schematisierte Draufsicht auf das Fahrzeug der Figur 3, bei der die Reichweiten der Fahrwegscanner und der Plattformscanner angedeutet sind;
- Figur 5: eine schematisierte Draufsicht auf das Fahrzeug der Figuren 3 und 4, bei dem neben Schutzbereichen auch Warnbereiche vorgesehen sind;
- Figuren 6-8: schematische Ansichten verschiedener Arten von Bearbeitungsstationen;
- Figuren 9-11: in schematischen Seitenansichten verschiedene Fahrsituationen im Pulkbetrieb;
- Figur 12: in einer schematischen Seitenansicht verschiedene Positionierungen einer Karosserie auf Fahrzeugen;
- Figuren 13-15: in schematischen Seitenansichten verschiedene Ausführungsformen zur Abdeckung eines Spalts zwischen zwei Fahrzeugen; und
- Figuren 17-20: in schematischen Draufsichten verschiedene Bewegungsformen von Fahrzeugen im Pulkbetrieb.

### BESCHREIBUNG BEVORZUGTER AUSFÜHRUNGSBEISPIELE

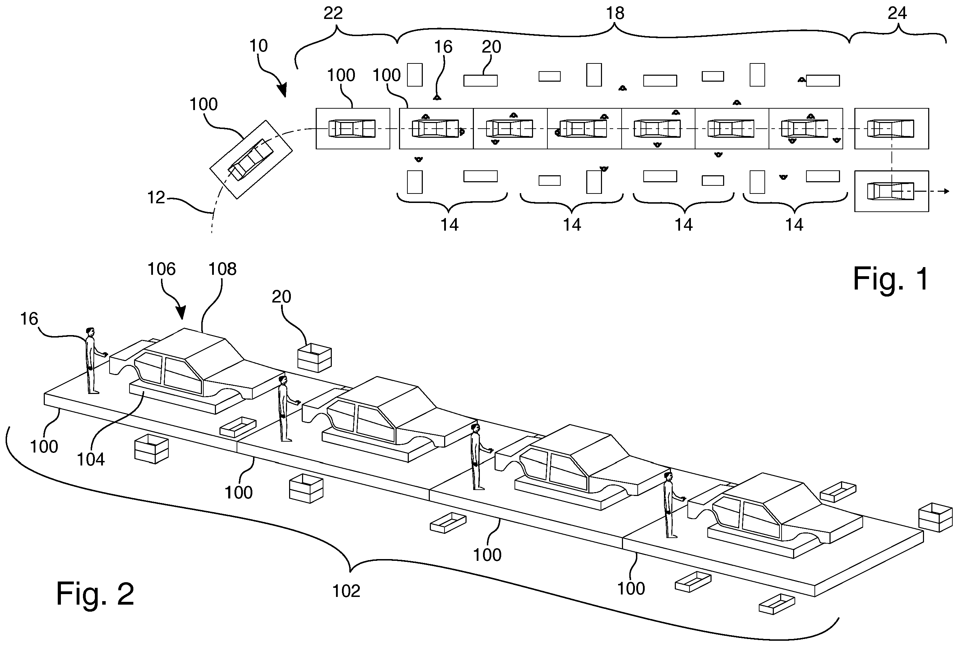

Figur 1 veranschaulicht in einer schematischen Draufsicht ein erfindungsgemäßes Fördersystem 10, bei dem mehrere Fahrzeuge 100 entlang einer Fahrtroute 12 einer Fertigungslinie im Pulkbetrieb fahren. Die Fahrzeuge 100 bilden einen Pulk oder Fahrverband 102, wenn mehrere aufeinanderfolgende Bearbeitungsstationen oder -bereiche 14 räumlich eng aufeinanderfolgen oder eine größere Bearbeitungsstation angefahren wird, die sich über mehrere Fahrzeuglängen erstreckt. An den Bearbeitungsstationen 14 sind Werker 16 neben oder auf den Fahrzeugen 100 zugange. Die Bearbeitungsstationen oder -bereiche 14 der Figur 1 bilden eine Montagelinie 18. An den Bearbeitungsstationen 14 sind schematisch Arbeitsmaterialien oder Werkzeuge 20 dargestellt.

Vor dem Einfahren in die Montagelinie 18, die im Pulk durchfahren wird, besteht ein Einfädelbereich 22, in dem ein einzelnes Fahrzeug 100 in den Pulk aufgenommen wird. Entsprechend ist am Ende der Montagelinie 18 ein Ausfädelbereich 24 vorgesehen, in dem der Pulk wieder aufgelöst wird.

Figur 2 zeigt in einer schematischen Perspektivansicht den Pulk 102, bei dem mehrere Fahrzeuge 100 im Wesentlichen ohne dazwischen befindliche Lücke zu einem Fahrverband zusammengeschlossen sind. Der Pulk 102 bewegt sich gewissermaßen wie ein einziges Fahrzeug 100. Werker 16 können gefahrlos zwischen den Fahrzeugen 100 hin- und herwechseln, sofern dies gewünscht ist.

Auf den Fahrzeugen 100 sind mittels Werkstückaufnahmen 104 befestigte Werkstücke 106, hier beispielsweise Fahrzeugkarosserien 108, angeordnet. Bei den Werkstückaufnahmen kann es sich beispielsweise um für eine Fahrzeugkarosserie 108 geeignete Stifte oder Pins 105 oder Schlitten handeln.

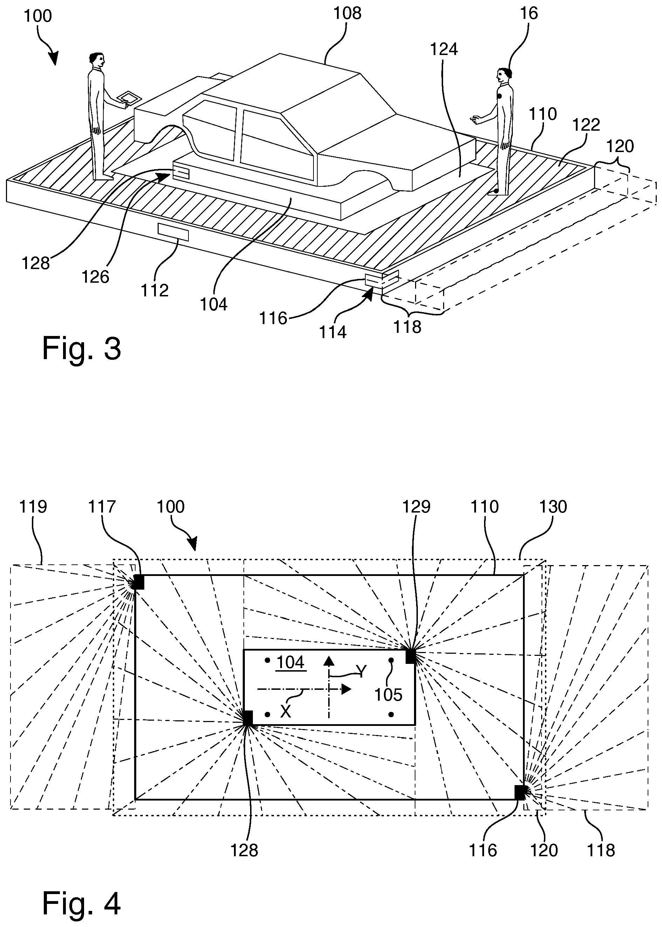

Figur 3 veranschaulicht in einer perspektivischen Ansicht ein Fahrzeug 100, das Teil des Fördersystems 10 ist. Das Fahrzeug 100 weist, wie bereits erwähnt, eine Werkstückaufnahme 104 auf, an der ein zu bearbeitendes Werkstück 106, hier eine noch nicht fertig montierte Kraftfahrzeugkarosserie 108, befestigt ist. Das Fahrzeug 100 weist ferner eine Montageplattform 110 auf, die für Personen wie etwa Werker 16 begehbar ist. Das Fahrzeug 100 verfügt über einen Antrieb (nicht dargestellt), der eine omnidirektionale Fahrweise des Fahrzeugs 100 ermöglicht. Das Fahrzeug 100 kann sich also in jede beliebige Raumrichtung in der Ebene fortbewegen. Insbesondere sind Längs- und Querfahrten hinsichtlich der Längsachse eines Fahrzeugs 100 möglich.

Hinsichtlich einer konkreten Ausgestaltung eines solchen Antriebs wird auf die DE 10 2017 103 931 A1 verwiesen, in der ein beispielhaftes Fahr-Dreh-Modul ausgeführt ist.

In die Montageplattform 110 integriert ist eine Steuereinheit 112, welche unter anderem den Antrieb des Fahrzeugs 100 ansteuert.

Die Steuereinheit 112 kann beispielsweise ein Navigationssystem, mit dem sich das Fahrzeug 100 beispielsweise in einer Fertigungshalle orientieren kann, umfassen.

Das Fahrzeug 100 weist ferner einen Fahrwegsensors 114 auf, der vorliegend als Fahrwegscanner 116 ausgeführt ist. Der Fahrwegscanner 116 dient zur Überwachung der Fahrsituation des Fahrzeugs 100 wie nachfolgend unter Bezugnahme auf die Figur 4 ausführlicher erläutert werden wird. Der Fahrwegscanner 116 ist so ausgelegt, dass er einerseits während der Fahrt des Fahrzeugs 100 in der Fahrtrichtung den vor dem Fahrzeug 100 liegenden Bereich 118 erfasst und vor einer möglichen Kollision warnt. Dabei ist ein Sicherheitsbereich 120 vorgesehen, der nicht unterschritten werden darf. Der Fahrwegscanner 116 ist wie in Figur 3 dargestellt so angeordnet, dass er sowohl den direkt vor dem Fahrzeug 100 liegenden Bereich 118 erfasst, der in Bewegungsrichtung des Fahrzeugs 100 liegt. Der Fahrwegscanner kann beispielsweise auf optischer Basis - beispielsweise als Laserscanner oder als Kamera - oder akustischer Basis - beispielsweise als Ultraschallsensor - arbeiten. Der Fahrwegscanner 116 kann auch Bereiche erfassen, die seitlich über den reinen Fahrwegbereich des Fahrzeugs 100 hinausragen.

Dies ist in Figur 4 anschaulich dargestellt. Figur 4 zeigt eine schematische Draufsicht auf das Fahrzeug 100 ohne befestigtes Werkstück 106, so dass die Werkstückaufnahme 104 in ihren Umrissen gut zu erkennen ist. An den Außenseiten der Montageplattform 110 sind zwei Fahrwegscanner 116, 117 angeordnet. Die Fahrwegscanner 116, 117 sind bei der in Figur 4 gezeigten Fahrsituation, bei der sich das Fahrzeug 100 entlang seiner Längsachse X bewegt, so eingestellt, dass sie Bereiche 118, 119 erfassen, die sich in Bewegungsrichtung X vor dem Fahrzeug 100 bzw. hinter dem Fahrzeug 100 befinden. Aufgrund der Anordnung der Fahrwegscanner 116, 117 sind diese auch in der Lage, Bereiche abzudecken, die seitlich neben der Bewegungsrichtung X liegen, um so bei einer Bewegung des Fahrzeugs in Querrichtung Y ebenfalls eine Kollisionsvermeidung durchführen zu können. Wie aus Figur 4 ersichtlich ist, ragen die Bereiche 118, 119 seitlich neben der eigentlichen Fahrzeugkontur hervor.

Neben den als Schutzfelder ausgebildeten Bereichen 118, 119 können Warnfelder vorgesehen sein, die den Schutzfeldern vorgelagert sind.

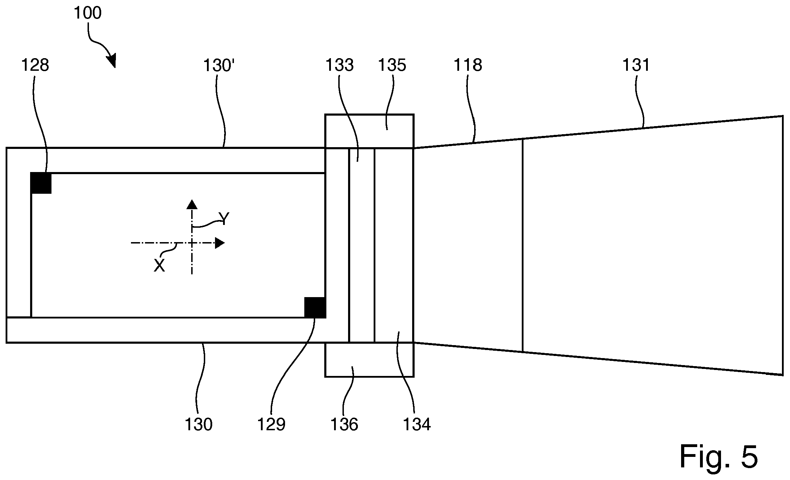

Dies ist beispielhaft in Figur 5 dargestellt. Es werden die gleichen Bezugszeichen wie in Figur 4 für gleiche oder vergleichbare Merkmale verwendet. Das Fahrzeug 100 weist neben den Bereichen 118, 119 - in Figur 5 ist der Übersichtlichkeit halber nur ein Bereich 118 als Schutzfeld beispielsweise für eine Vorwärtsfahrt in Richtung X aktiviert - ein solches Warnfeld 131 auf. Das Warnfeld 131 ist beispielhaft dem Bereich 118 vorgelagert und kann für eine Anpassung der Geschwindigkeit und der Ausdehnung des Schutzfeldes 118 und des Warnfeldes 131 wie eingangs beschrieben verwendet werden. Des Weiteren sind den zusätzlichen Bereichen 130, 130', die durch die Plattformscanner 128, 129 überwacht werden, weitere Bereiche oder Felder vorgelagert, die ebenfalls durch den Plattformscanner 128 überwacht und definiert werden. Gleiche Felder könnten spiegelbildlich auf der Seite des anderen Plattformscanners 128 gebildet und überwacht werden.

Direkt in Fahrtrichtung X vorgelagert sind nacheinander zwei Felder 133, 134. Seitlich den Feldern 133, 134 vorgelagert sind Felder 135, 135. Weiter in Fahrtrichtung X gesehen schließen sich dem Feld 134 die sich mit einem Winkel von 10° öffnenden Felder bzw. Bereiche 118, 131 an.

Während das Warnfeld 131 dauerhaft als Warnfeld 131 ausgebildet ist, können die anderen Felder 118, 133-136 phasenweise als Schutzfeld oder als Warnfeld verwendet werden.

Die Anpassung der Geschwindigkeit des Fahrzeugs 100 und die Veränderung der einzelnen Felder als Warn- oder Schutzfeld können beispielsweise nach folgendem Schema erfolgen:

| Fahrtgeschwindigkeit: | 60m/min | 30m/min | 15m/min | 6m/min |
|---|---|---|---|---|
| Definition "s" | Not-Halt | Not-Halt | Not-Halt | Not-Halt |
| Definition "w" | Warnfeld >30m/min | Warnfeld > 15m/min | Warnfeld >6m/min | |

| Fahrtrichtung vorwärts 0° bis 5°: | | | | |
|---|---|---|---|---|
| Feldzuordnung | s: 130, 130', 133, 134, 118 | s: 130, 130', 133, 134 | s: 130, 130', 133 | s: 130, 130' |
| | w: 131 | w: 118 | w: 134 | |

| Fahrtrichtung vorwärts. 5° bis 30° | | | | |
|---|---|---|---|---|
| Feldzuordnung | n. a. | s: 130, 130', 133, 134, 135/136 | s: 130, 130', 133 | s: 130, 130' |
| | | | w: 134, 135/136 | |
| | | w: 118 | | |

Anhand der obigen Tabelle ist zu erkennen, wie sukzessive die verschiedenen Felder umdefiniert und gegebenenfalls sogar ausgeschaltet werden können..

Wie in der Figur 3 gezeigt weist die Montageplattform 10 einen Laufwegebereich 122 auf. Dieser stellt den Bereich dar, innerhalb dessen sich Werker 16 gefahrlos auf der Plattform bewegen können und stellt somit einen sicheren Bereich dar. Der Laufwegebereich 122 ist gegenüber einem gesperrten Bereich 124 abgegrenzt. Ein Zutritt von Werkern 16 in dem gesperrten Bereich 124 sollte erfolgen. Zur Überwachung der Montageplattform 110 und insbesondere des Laufwegebereichs 122 und des gesperrten Bereichs 124 sind berührungslose Plattformsensoren 126 in Form von Plattformscannern 128, 129 vorgesehen.

Wie aus der Figur 4 ersichtlich decken in der dort gezeigten beispielhaften Ausführungsform zwei Plattformscanner 128, 129 den gesamten nicht von der Werkstückaufnahme 104 eingenommenen Bereich der Montageplattform 110 ab. Zusätzlich kann vorgesehen sein, dass der von den Plattformscannern 128, 129 abgedeckte Bereich über den eigentlichen Bereich der Plattform 110 hinausgeht und damit einen zusätzlichen Bereich 130 abdeckt. Bevorzugt ist es, wenn dieser zusätzliche Bereich 130 sich hinsichtlich seiner Ausdehnung entlang der Montageplattform 110 zumindest teilweise mit dem Sicherheitsbereich 120 der Fahrwegscanner 116, 117 überschneidet und besonders bevorzugt darüber hinausgeht. Dies ist beispielhaft in Figur 4 gezeigt. Dort überlappt der zusätzliche Bereich 130 des Plattformscanners 129 den Sicherheitsbereich 120 des Fahrwegscanners 116.

Die Plattformscanner bzw. Laufwegescanner 128, 129 sind auf der Montageplattform 110 montiert und erfassen in den Figuren 3 und 4 gezeigten Ausführungsform einen Bereich auf oder etwas oberhalb der Montageplattform 110,jedoch nicht Bereiche unterhalb einer Ebene, die durch die Oberseite der Montageplattform 110 gebildet wird. Dies ist einerseits dadurch bedingt, dass die Plattformscanner 129, 128 im Inneren des gesperrten Bereichs 124 der Montageplattform 110 montiert sind und somit zurückversetzt vom Rand der Montageplattform 110 angebracht sind. Alternativ oder zusätzlich könnten ein oder mehrere Plattformscanner am Rand der Montageplattform 110, beispielsweise an den Ecken wie die Fahrwegscanner 116, 117 montiert sein und so die Möglichkeit eröffnen, auch Bereiche um die Montageplattform 110 herum zu überwachen, die sich unterhalb der Oberseite der Montageplattform 110 befinden.

Bei der in den Figuren 3 und 4 gezeigten Ausführungsform liefern die Fahrwegscanner 116, 117 und die Plattformscanner 128, 129 entsprechend Signale oder Informationen an die Steuereinheit 112 und ermöglichen so ein weitgehend autonomes, zumindest ein fahrerloses Fahren des Fahrzeugs 100. Das Fahrzeug 100 kann somit Kollisionen über die Fahrwegscanner 116, 117 vermeiden und gleichzeitig die Montageplattform 110 über die Plattformscanner 128, 129 im Fahr- und Standbetrieb überwachen.

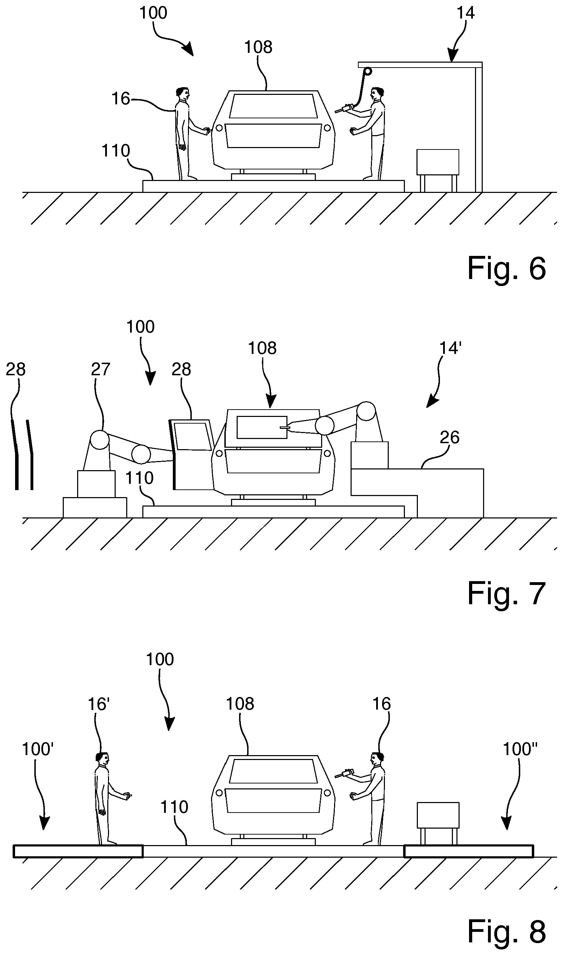

Die Figuren 6-8 zeigen unterschiedliche Einsatzsituationen eines Fahrzeugs 100. Bei der in Figur 6 gezeigten Situation dient die Montageplattform 110 des Fahrzeugs 100 dazu, eine bewegliche Arbeitsplattform für Werker 16 zu bieten, die an einer Fahrzeugkarosserie 108 Arbeiten zu verrichten haben. Beispielsweise kann vorgesehen sein, dass die Werker zusammen mit der Montageplattform 110 sich zu der in Figur 6 symbolisch dargestellten Bearbeitungsstation 14 bewegen, dort bei einem Halt manuelle Arbeiten durchführen und sich danach mit der Montageplattform 110 weiter bewegen. Alternativ oder zusätzlich kann vorgesehen sein, dass die Werker 16 erst nach dem Erreichen der Bearbeitungsstation 14 durch das Fahrzeug 100 die Montageplattform 110 betreten, manuelle Tätigkeiten ausführen und nach Beendigung die Montageplattform wieder verlassen. Hier kann es beispielsweise Aufgabe der Fahrzeugscanner 116, 117 sein, beim Annähern und Verlassen der Bearbeitungsstation 14 für eine kollisionsfreie Fahrt zu sorgen. Die Plattformscanner 128, 129 hingegen können beispielsweise darauf achten, dass möglicherweise gesperrte Bereiche der Plattform 110 nicht betreten werden oder dass sich die richtigen, d.h. beispielsweise die richtig qualifizierten, oder die richtige Anzahl an Werkern 16 auf der Plattform 110 befinden.

Figur 7 veranschaulicht eine andere Situation. Bei der in Figur 7 dargestellten Bearbeitungsstation 14' arbeiten keine Werker an der Fahrzeugkarosserie 108, sondern automatisch arbeitende Roboter 26, 27 und führen beispielhaft Montagetätigkeiten durch. Beispielsweise befestigt der auf der linken Seite gezeigte Roboter 27 Fahrzeugtüren 28. Bei dieser Bearbeitungsstation 14' müssen beispielsweise die Fahrzeugscanner 116, 117 und die Plattformscanner 128, 129 darauf achten, dass sich kein Werker der Montageplattform nähert, diese betritt oder sich bei der Anfahrt auf der Montageplattform 110 befindet, da sich der Operationsbereich der Roboter 26, 27 auf ansonsten frei zugänglichen Bereichen der Montageplattform 110 befindet bzw. sogar Teile der Roboter, beispielsweise des Roboters 26, weit die Montageplattform 110 überragen.

Figur 8 veranschaulicht eine weitere Anwendungssituation. Ein Fahrzeug 100 befördert ein Werkstück in Form einer Fahrzeugkarosserie 108 auf einer Montageplattform 110. Die Montageplattform 110 kann durch einen Werker 16 betreten werden, der dann beispielsweise an der Fahrzeugkarosserie 108 Tätigkeiten ausführen kann. Es sind weitere Fahrzeuge 100' sowie 100" seitlich neben dem Fahrzeug 100 angeordnet. Beispielsweise kann das auf einer Seite des Fahrzeugs 100 befindliche zweite Fahrzeug 100' einen Werker 16' heranfördern bzw. als begehbare seitliche Bühne dienen. Ein drittes Fahrzeug 100" kann beispielsweise ebenfalls neben dem Fahrzeug 100 angeordnet sein und für das Heranfördern oder Abtransportieren von Materialien oder Werkzeugen dienen. Aufgrund des gleichen Niveaus der Montageplattformen, die das jeweilige Fahrzeug 100, 100', 100" bietet, können sich die Werker 16, 16' im Stillstand der Fahrzeuge oder bei einer Pulkfahrt frei bewegen.

Gleichzeitig kann mittels der Fahrwegscanner 116, 117 und der Plattformscanner 128, 129 die Annäherung der Fahrzeuge 100, 100', 100" aneinander und voneinander weg ermöglicht werden und bei einem relativen Stillstand der Fahrzeuge zueinander die gefahrlose Begehbarkeit signalisiert werden. Dies kann beispielsweise durch optische oder akustische Signale für die Werker 16, 16' signalisiert werden. Alternativ oder zusätzlich kann es auch möglich sein, dass auf den Montageplattformen 110 Absperreinrichtungen vorgesehen sind, die bei einem gefahrlosen Betreten freigegeben werden.

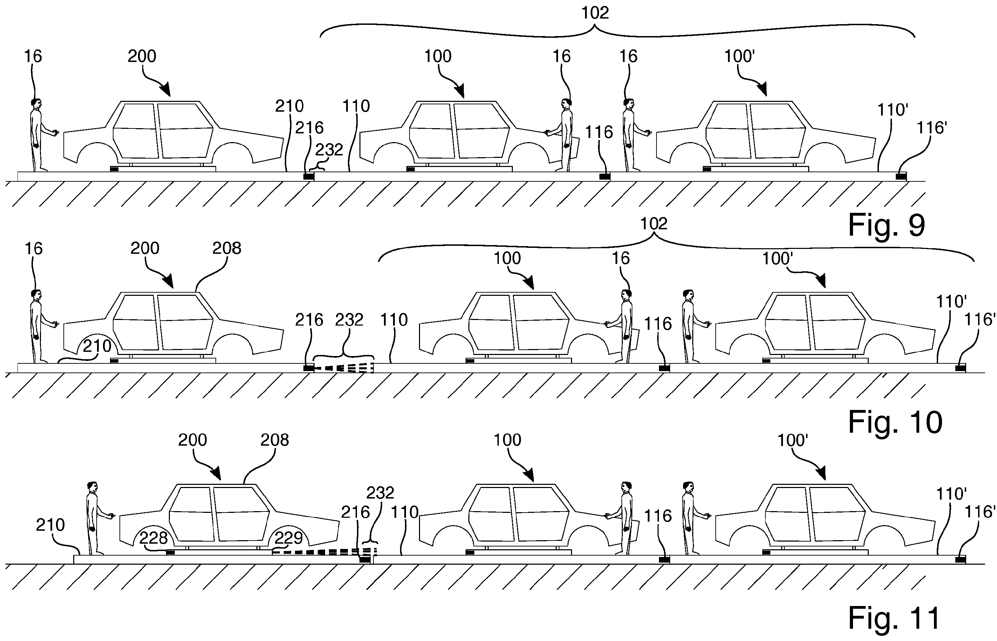

Die Figuren 9-11 zeigen verschiedene Fahrsituationen mit mindestens zwei Fahrzeugen. In Figur 9 bilden mindestens zwei Fahrzeuge 100, 100' einen Fahrverband oder Pulk 102 und bewegen sich mit einer gemeinsamen Geschwindigkeit fort. Ein drittes Fahrzeug 200 weist die gleiche Geschwindigkeit auf und hält so den Kontakt zu dem Fahrverband 102 und ist somit Teil desselben. Die auf den Montageplattformen 110, 110', 210 befindlichen Werker können sich prinzipiell frei auf den Montageplattformen innerhalb der vorgegebenen Laufwegebereiche bewegen. Jedes der Fahrzeuge 100, 100', 200 weist einen Fahrwegscanner 116, 116', 216 auf, der in der in Figur 9 vorliegenden Fahrsituation dazu eingesetzt wird, den Abstand des einen Fahrzeugs zum jeweils vorausfahrenden Fahrzeug innerhalb bestimmter Grenzen zu halten. Es kann somit sichergestellt werden, dass beispielsweise der Abstand 232 zwischen zwei Montageplattformen 110, 210 nie größer als ein bestimmter maximaler Sicherheitsabstand von beispielsweise 20 oder 50 mm wird. Gleichzeitig kann dieser Sicherheitsabstand 232 dazu verwendet werden, geringfügige Geschwindigkeitsunterschiede auszugleichen oder auch bei notwendigen Richtungsanpassungen mithilfe einer Anpassung des tatsächlichen Abstandes die Fahrmanöver zu erleichtern oder erst zu ermöglichen.

Figur 10 veranschaulicht den Annäherungsvorgang eines Fahrzeugs 200 - in dem gezeigten Ausführungsbeispiel beladen mit einer Fahrzeugkarosserie 208 als Werkstück an einen Pulk 102, gebildet aus zwei Fahrzeugen 100, 100'. In der in Figur 10 gezeigten Fahrsituation bewegt sich der Pulk 102 mit einer ersten Geschwindigkeit fort, während das sich annähernde Fahrzeug 200 eine größere Geschwindigkeit aufweist. Alternativ könnte auch der Pulk 102 sich in Ruhe befinden und das Fahrzeug 200 sich entsprechend annähern. Solange der Abstand zwischen dem sich annähernden Fahrzeug 200 und dem hintersten Fahrzeug 100 im Pulk 102 groß genug ist, wird, wie in Figur 10 gezeigt, der Fahrwegsensor 216 verwendet, um diesen Abstand und damit auch die Relativgeschwindigkeit zu steuern. Gleichzeitig wird der Fahrwegsensor in Form des Fahrzeugscanners 216 dazu eingesetzt, die zwischen den Fahrzeugen bestehende Lücke 132 auf mögliche Kollisionen hin zu überwachen. Die Lücke 132 stellt ein besonderes Gefährdungsmerkmal für Bedienpersonen wie etwa die Werker 16 dar und muss insbesondere bei einem Annäherungsvorgang lückenlos überwacht werden.

Figur 11 zeigt die Situation, in der sich das an den Pulk 102 annähernde Fahrzeug 200 innerhalb des Sicherheitsabstandes befindet, den der Fahrwegscanner 216 definiert. Dessen Kollisionsüberwachung ist in dieser Fahrsituation inaktiv. In dieser Fahrsituation übernimmt der Plattformscanner 229 des sich annähernden Fahrzeugs 200 die Aufgabe einer Kollisionsüberwachung des Spalts 232 für den Fall, dass der Spalt 232 nicht durch sonstige mechanische Vorrichtungen abdeckbar ist, kann der Plattformscanner 229 die Überwachung des Spalts 232 durchgehend durchführen. Andernfalls übernimmt er die Überwachung solange, bis der Spalt 132 abgedeckt ist. Diese Überwachung kann immer dann stattfinden, wenn bei einem Manöver - also bei einer Änderung der Fahrsituation - ein Spalt 132 entsteht, der für das Bedienpersonal, also beispielsweise für die Werker 16, eine mögliche Gefahr darstellt.

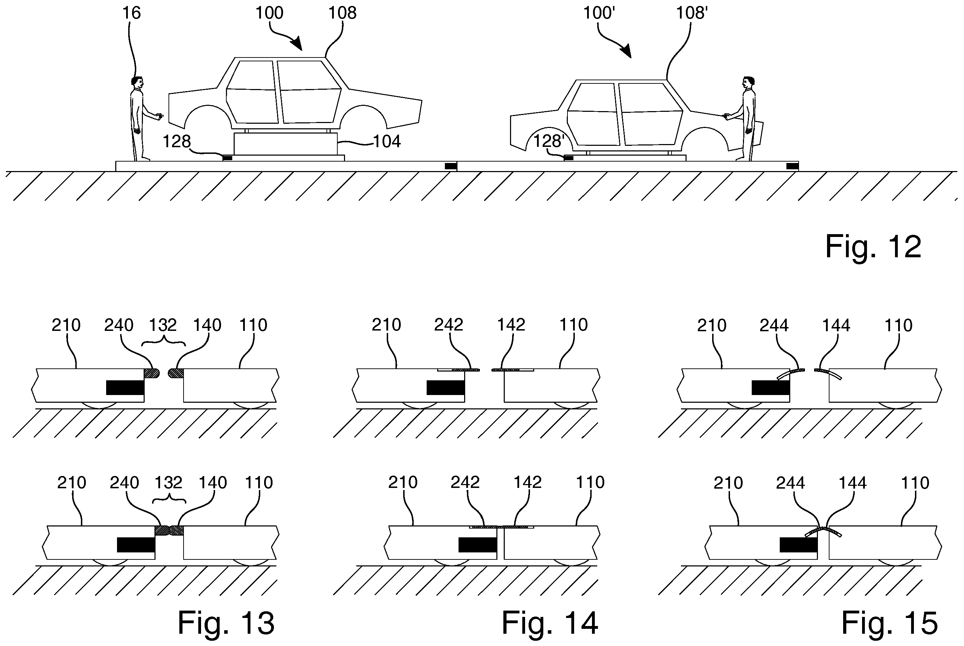

Figur 12 veranschaulicht die Möglichkeit einer dynamischen Anpassung der Reichweite der Plattformscanner 128. Während in der in Figur 12 gezeigten linken Situation das Fahrzeug 100 die Fahrzeugkarosserie 108 auf einer erhöhten Werkstückaufnahme 104 aufweist, ist die Fahrzeugkarosserie 108' auf dem in Figur 12 gezeigten rechten Fahrzeug 100' niedriger gelagert. Dabei kann beispielsweise die Werkstückaufnahme 104 eine Hubvorrichtung, gegebenenfalls auch eine Drehvorrichtung, aufweisen. Je nach Anforderung kann beispielsweise der Plattformscanner 128 des linken Fahrzeugs 100 so eingestellt werden, dass es dem Werker 16 möglich ist, auch unterhalb der Fahrzeugkarosserie 108 zu arbeiten und somit den Laufwegebereich 122 zu vergrößern, ebenso kann es umgekehrt bei höheren Geschwindigkeiten und eventuellen Nick- oder Kippbewegungen des Fahrzeugs 104 notwendig sein, den Laufwegebereich 122 soweit zu verringern, dass für den Werker 16 bei derartigen Bewegungen keine Gefahr besteht.

Die Figuren 13-15 veranschaulichen verschiedene Ausführungsformen zur mechanischen Abdeckung der Spalte bzw. des Abstands 132. Die Figuren 13-15 zeigen jeweils in der oberen Darstellung eine Montageplattform 210, welches sich an eine Montageplattform 110 eines vorausfahrenden Fahrzeugs annähert. In der oberen Darstellung ist jeweils der Annäherungsvorgang im Gange, in der unteren Darstellung ist er vollzogen. Die Figur 13 zeigt stirnseitig der Montageplattform 110, 210 befestigte elastische Elemente 140, 240. Sobald der Annäherungsprozess vollzogen ist, ist der Spalt 102 minimiert, die elastischen Elemente befinden sich in Kontakt und sind gegebenenfalls - je nach Ausführung - leicht komprimiert. Es können auch über den Kontakt der elastischen Elemente 140, 240 elektrische Kontakte geschlossen werden, die dann ein entsprechendes Signal an die Steuereinheit 112 abgeben.

In den Darstellungen der Figur 14 sind die Verschluss- bzw. Abdeckelemente als Schiebeelemente 142, beispielsweise Schiebebleche, ausgeführt. Die Figur 15 zeigt Klappelemente, beispielsweise Klappbleche, welche zur Abdeckung dienen. Sowohl die Schiebeelemente 142, 242 als auch die Klappelemente 144, 244 sind in der gezeigten Ausführungsform stirnseitig montiert und können ebenfalls als Elemente dienen, welche bei Kontakt ein elektrisches Signal auslösen können. Alle gezeigten Verschlusselemente können so ausgeführt sein, dass ein Betreten für einen Werker 16 unproblematisch ist, so dass eine gemeinsame begehbare Laufebene, welche montageplattformübergreifend bzw. fahrzeugübergreifend ausgebildet ist, entsteht.

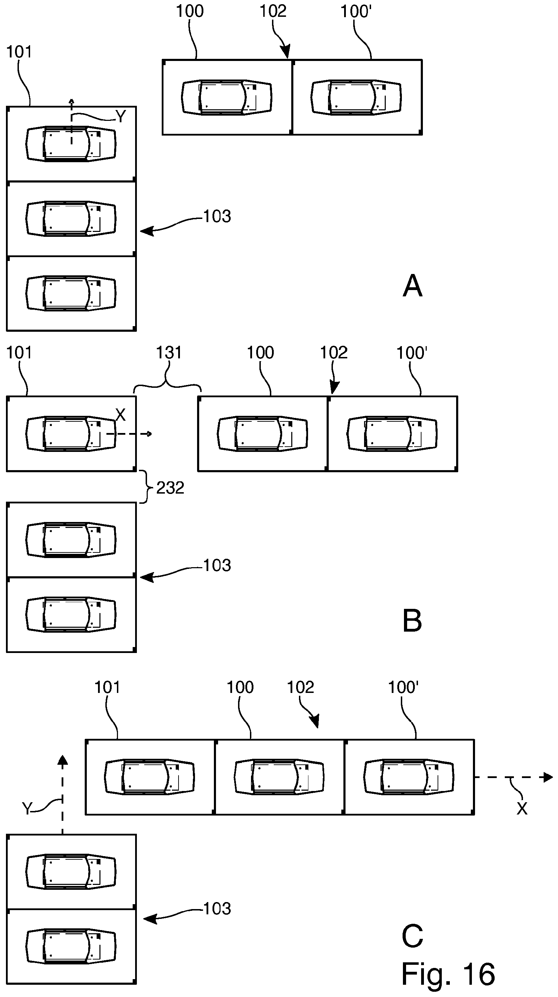

Die Figuren 16-20 zeigen verschiedene Bewegungsmöglichkeiten eines Fahrzeugs 100 bei der Annäherung an einen Fahrverband bzw. bei der Loslösung von einem Fahrverband.

Figur 16 zeigt in drei Darstellungen A, B, C in dieser Reihenfolge die Loslösung eines Fahrzeugs 101 aus einem Fahrzeugverband bzw. Pulk 103 und dessen Anschluss an einen Fahrzeugverband bzw. Pulk 102, bestehend aus zwei Fahrzeugen 100, 100' . Zum Ablösen des Fahrzeugs 101 aus dem Fahrzeugverbund 103 ist eine Beschleunigung des Fahrzeugs 101 entlang einer Richtung Y durchzuführen, um einen Abstand 232 zwischen dem Fahrzeug 101 und dem verbleibenden Restfahrzeugverband 103 zu schaffen. Um anschließend das Fahrzeug 101 an den Fahrzeugverband 102 anzuschließen, ist ein Abbremsen des Fahrzeugs 101 in Richtung Y durchzuführen bis zum endgültigen Stillstand in diese Richtung, um anschließend eine Beschleunigung des Fahrzeugs in Richtung X durchzuführen, welche der Bewegungsrichtung des Fahrzeugverbands 102 entspricht. Diese Beschleunigung ist in Abbildung B dargestellt. Mit Erreichen des Fahrzeugverbands 102 ist eine weitere Beschleunigung, nämlich ein Abbremsen auf Fahrzeugverbandgeschwindigkeit, notwendig. Abbildung C zeigt den neu gebildeten Fahrzeugverband 102, bestehend aus den Fahrzeugen 101, 100, 100', der sich mit einer gemeinsamen Geschwindigkeit entlang der Bewegungsrichtung X fortbewegt. Gleichzeitig ist der Fahrzeugverband 103 abgebildet, der sich weiter mit unverminderter Geschwindigkeit in Richtung Y fortbewegt. Wie aus dieser Darstellung ersichtlich ist, ist eine Fortbewegung der Fahrzeuge 101 lediglich entlang zweier senkrecht zueinander stehenden Achsen aufwändig hinsichtlich der Steuerung und der erforderlichen Bewegungsabläufe. Es sind mehrere Beschleunigungen in verschiedene Bewegungsrichtungen notwendig.

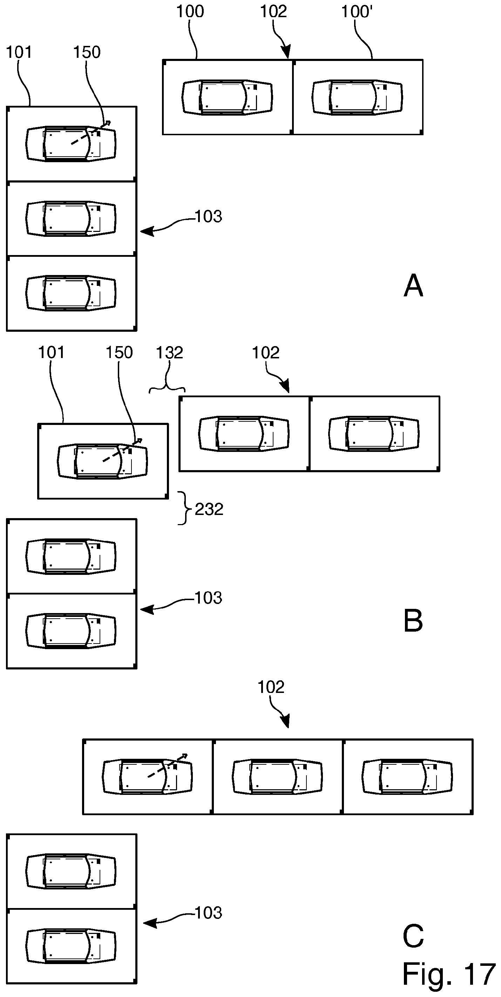

Die Abbildungen der Figur 17 zeigen einem Bewegungsablauf wieder in drei Abbildungen A, B, C, der ausgehend von der gleichen Ausgangslage die gleiche Endsituation erreicht. Hier wird allerdings von dem Umstand Gebrauch gemacht, dass das Fahrzeug 101 mit einem omnidirektionalen Fahrwerk ausgestattet ist. Dies erlaubt es dem Fahrzeug 101, sich entlang einer Bewegungsrichtung 150 zu beschleunigen und entlang derer sich auch fortzubewegen. Diese Bewegungsrichtung 150 schafft sofort einen Abstand 232, welcher zwischen dem Fahrzeug 101 und dem verbleibenden restlichen Fahrzeugverband 103 benötigt wird. Gleichzeitig verringert die Bewegungsrichtung 150 sofort den Abstand 132 der zwischen dem Fahrzeug 101 und dem Ziel-Fahrzeugverband 102 besteht. Somit kann mit einer einzigen Beschleunigung zum Erreichen des Ziel-Fahrzeugverbands 102 (und einem anschließenden Abbremsen auf Fahrverbandgeschwindigkeit) der Übergang von einem Fahrverband 103 auf den zweiten Fahrverband 102 erfolgen.

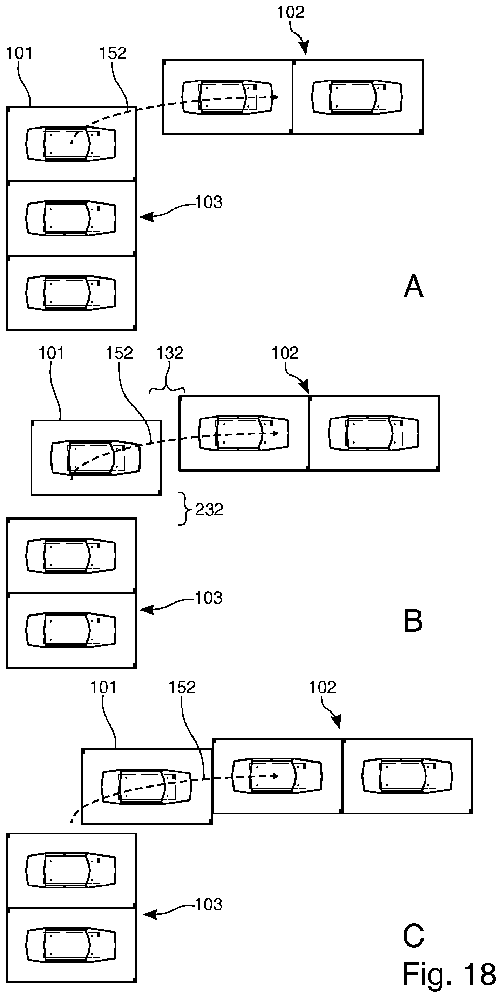

In den Abbildungen der Figur 18 ist in gleicher Weise wie in den vorhergehenden Ausführungsbeispielen der Figuren 16 und 17 in drei Abbildungen A, B, C eine Übergangssituation von einem Fahrzeugverband 103 auf einen zweiten Fahrzeugverband 102 gezeigt. Im Unterschied zur Figur 17 ist für das übergehende Fahrzeug 101 eine Fahrtroute 152 vorgesehen, die nicht linear ist. Vielmehr handelt sich bei der Fahrtroute 152 um eine Kurve, die zunächst eine rasche Vergrößerung der zwischen dem verbleibenden Fahrzeugverband 103 und dem zu übergehenden Fahrzeug 101 entstehenden Lücke 232 ermöglicht. Schon nach kurzer Zeit entlang der Fahrtroute 152 wird die Lücke 132 zwischen dem Ziel-Fahrverband 102 und dem zu übergehenden Fahrzeug 101 geschlossen. Die exakte parallele Ausrichtung des Fahrzeugs 101 zum anzuschließenden Fahrverband 102 kann im weiteren Verlauf der Fahrtroute 152 auch noch bereits nach dem Schließen der Lücke 132 (wie in der Abbildung C gezeigt) erfolgen.

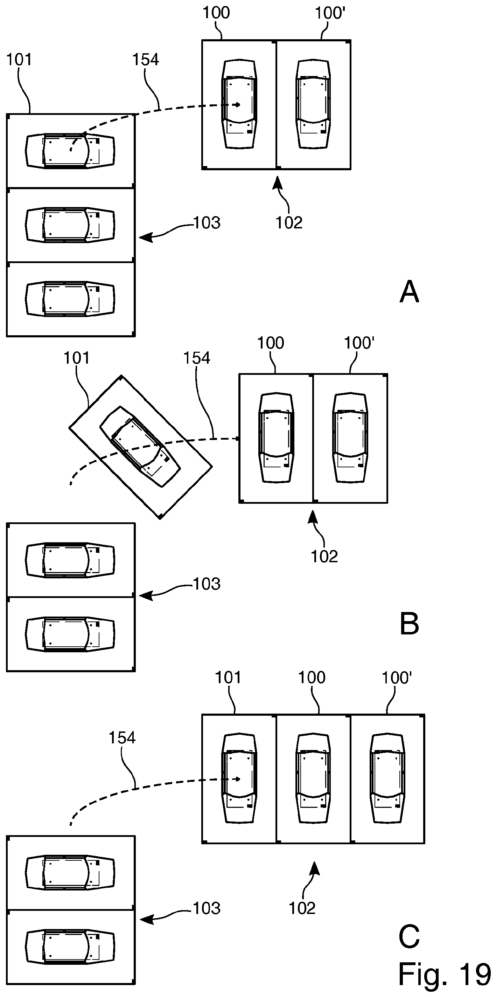

Figur 19 zeigt ebenfalls in drei Abbildungen einen zur Figur 18 sehr vergleichbaren Umsetzvorgang von einem Pulk 103 auf einen zweiten Pulk 102 eines Fahrzeugs 101. Die von dem Schwerpunkt des Fahrzeugs 101 beschriebene Bahn ist sehr ähnlich der Bahn 152 der Figur 18. Im Unterschied dazu sieht aber die Bahn 154 der Figuren 19 eine gleichzeitig stattfindende Drehung des Fahrzeugs 101 statt. Bei der in dem Ausführungsbeispiel der Figuren 19 gezeigten Bahn 154 dreht sich das Fahrzeug 101 von oben gesehen um 90° und schließt sich dadurch der Ausrichtung der Fahrzeuge 100, 100' des Pulks 102 an.

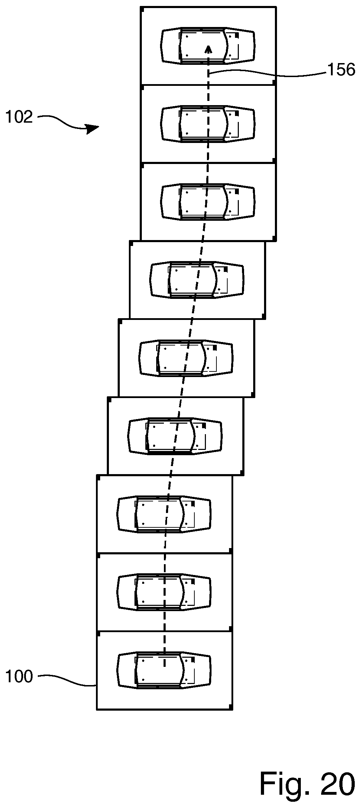

Figur 20 zeigt in anschaulicher Weise einen Fahrzeugpulk 102, bei dem entlang einer Fahrtroute 156 ein seitlicher Versatz der einzelnen Fahrzeuge 100 erfolgt.

## Patentansprüche

1. Fahrzeug (100) für ein Fördersystem (10) zum gleichzeitigen Transport von Werkstücken (100) und Werkern (16), wobei das Fahrzeug (100)
a) eine Werkstückaufnahme (104),
b) eine für Werker (16) begehbare Montageplattform (100),
c) einen eigenen Antrieb, der dazu eingerichtet ist, das Fahrzeug (100) unabhängig von anderen Fahrzeugen (100') des Fördersystems (10) anzutreiben,
d) einen berührungslosen Fahrwegsensor 114 zur Überwachung der Fahrsituation des Fahrzeugs 100 innerhalb eines Sicherheitsabstands (120) und
e) eine Steuereinrichtung (112) zur Steuerung des Antriebs unter anderem in Abhängigkeit von einem Signal des Fahrwegsensors (114) aufweist,
**dadurch gekennzeichnet dass**
f) das Fahrzeug (100) einen berührungslosen Plattformsensor (128, 129) zur Überwachung der Montageplattform (110) aufweist, wobei der Plattformsensor (128, 129) dazu einrichtet ist, zumindest zeitweise alternativ die Überwachung der Fahrsituation des Fahrzeugs (100) zu übernehmen oder zumindest zeitweise zusätzlich die Überwachung der Fahrsituation des Fahrzeugs (100) zu unterstützen.

2. Fahrzeug nach Anspruch 1, wobei das Übernehmen oder das Unterstützen bei Unterschreiten des Sicherheitsabstands (120) erfolgen.

3. Fahrzeug nach einem der vorhergehenden Ansprüche, wobei die Überwachung der Fahrsituation eine Kollisionsvermeidung, insbesondere für den Personenschutz, umfasst.

4. Fahrzeug nach einem der vorhergehenden Ansprüche, wobei der Plattformsensor (128, 129) dazu eingerichtet ist, seine Reichweite dynamisch oder in Stufen anzupassen.

5. Fahrzeug nach einem der vorhergehenden Ansprüche, wobei der Fahrwegsensor (118, 119) und der Plattformsensor (128, 129) in der Horizontalen arbeiten.

6. Fahrzeug nach einem der vorhergehenden Ansprüche, wobei der Erfassungsraum des Plattformsensors (128, 129) so einrichtbar ist, dass er um einen Sicherheitsabstand (120) über die Montageplattform (110) hinausgeht.

7. Fahrzeug nach einem der vorhergehenden Ansprüche, wobei der Plattformsensor (128, 129) einen Bereich oberhalb des Fahrwegsensors (118, 119) abdeckt.

8. Fördersystem (10) mit zumindest zwei Fahrzeugen (100, 101) nach einem der vorhergehenden Ansprüche.

9. Verfahren zur Steuerung eines Fahrzeugs mit einer Werkstückaufnahme, einer für Werker begehbare Montageplattform, einem eigenen Antrieb, der dazu eingerichtet ist, das Fahrzeug unabhängig von anderen Fahrzeugen des Fördersystems anzutreiben, einem berührungslosen Fahrwegsensor zur Überwachung der Fahrsituation des Fahrzeugs innerhalb eines Sicherheitsabstands, einer Steuereinrichtung zur Steuerung des Antriebs unter anderem in Abhängigkeit von einem Signal des Fahrwegsensors aufweist und einem berührungslosen Plattformsensor zur Überwachung der Montageplattform, mit den Schritten:
Überwachen der Fahrsituation des Fahrzeugs mit dem Fahrwegsensor;
Annähern an ein zweites Fahrzeug für eine Pulkbildung, Entfernen von einem zweiten Fahrzeug für ein Ablösen von einem Pulk oder Annähern des Fahrzeugs an eine bewegliche oder stationäre Störkontur;
sobald der Sicherheitsabstand zu dem zweiten Fahrzeug oder der Störkontur unterschritten wird bzw. solange sich das zweite Fahrzeug oder die Störkontur innerhalb des Sicherheitsabstands befindet, alternativ oder zusätzlich Durchführen einer Überwachung der Fahrsituation mit dem Plattformsensor.

10. Verfahren nach Anspruch 9, wobei das Überwachen der Fahrsituation eine Kollisionsvermeidung, insbesondere für einen Personenschutz, umfasst.

11. Verfahren nach Anspruch 9 oder 10, wobei der Plattformsensor während einer Annäherung bzw. einem Entfernen seine Reichweite dynamisch oder in Stufen anpasst.

12. Verfahren nach einem der Ansprüche 9 bis 11, wobei in einem Pulk der Fahrwegsensor die Abstandsregelung zu einem zweiten Fahrzeug übernimmt.

13. Verfahren nach einem der Ansprüche 9 bis 12, wobei der Plattformsensor die Überwachung der Montageplattform sowie eines Andockbereichs zu dem zweiten Fahrzeug übernimmt.

14. Verfahren nach einem der Ansprüche 9 bis 13, wobei der von dem Fahrwegsensor oder/und dem Plattformsensor erfasste Bereich von der aktuellen Fahrgeschwindigkeit, der Position, dem Beladungszustand des einen Fahrzeugs oder/und dem Abstand zu einem weiteren Fahrzeug abhängt.

## Claims

1. A vehicle (100) for a conveyor system ( 10) for the simultaneous transport of workpieces (100) and workers (16), wherein the vehicle (100) has
a) a workpiece holder (104),
b) an assembly platform (100) accessible to workers (16),
c) a dedicated drive which is set up to drive the vehicle (100) independently of other vehicles (100') of the conveyor system (10),
d) a contactless route sensor (114) for monitoring the driving situation of the vehicle 100 within a safety distance (120) and
e) a control device (112) for controlling the drive, inter alia depending on a signal from the route sensor (114),
**characterized in that**
f) the vehicle (100) has a contactless platform sensor (128, 129) for monitoring the assembly platform (110), wherein the platform sensor (128, 129) is set up to alternatively take over the monitoring of the driving situation of the vehicle (100) at least temporarily or additionally support the monitoring of the driving situation of the vehicle (100) at least temporarily.

2. The vehicle as claimed in claim 1, wherein the takeover or the support are carried out on falling below the safety distance (120).

3. The vehicle as claimed in any one of the preceding claims, wherein the monitoring of the driving situation includes collision avoidance, in particular for personal protection.

4. The vehicle as claimed in any one of the preceding claims, wherein the platform sensor (128, 129) is set up to adjust its range dynamically or in stages.

5. The vehicle as claimed in any one of the preceding claims, wherein the route sensor (118, 119) and the platform sensor (128, 129) work in the horizontal.

6. The vehicle as claimed in any one of the preceding claims, wherein the detection space of the platform sensor (128, 129) can be set up so that it extends beyond the assembly platform (110) by a safety distance (120).

7. The vehicle as claimed in any one of the preceding claims, wherein the platform sensor (128, 129) covers an area above the route sensor (118, 119).

8. A conveyor system (10) with at least two vehicles (100, 101) according to any one of the preceding claims.

9. A method for controlling a vehicle with a workpiece holder, an assembly platform accessible to workers, a dedicated drive set up to drive the vehicle independently of other vehicles of the conveyor system, a contactless route sensor for monitoring the driving situation of the vehicle within a safety distance, a control device for controlling the drive, inter alia depending on a signal from the route sensor, and a contactless platform sensor for monitoring the assembly platform, with the steps:
monitoring the driving situation of the vehicle with the route sensor;
approaching a second vehicle to form a group, moving away from a second vehicle for detachment from a group or an approach of the vehicle to a moving or stationary interfering contour;
once the safety distance from the second vehicle or the interfering contour is fallen below or as long as the second vehicle or the fault contour is within the safety distance, alternatively or additionally carrying out monitoring of the driving situation with the platform sensor.

10. The method as claimed in claim 9, wherein the monitoring of the driving situation includes collision avoidance, in particular for personal protection.

11. The method as claimed in claim 9 or 10, wherein the platform sensor adjusts its range dynamically or in stages during an approach or while moving away.

12. The method as claimed in any one of claims 9 to 11, wherein in a group the route sensor takes over control of the distance from a second vehicle.

13. The method as claimed in any one of claims 9 10 12, wherein the platform sensor takes over the monitoring of the assembly platform and a docking area to the second vehicle.

14. The method as claimed in any one of claims 9 to 13, wherein the area detected by the route sensor or/and the platform sensor depends on the current driving speed, the position, the load state of one vehicle and/or the distance from another vehicle.

## Revendications

1. Véhicule (100) pour un système de transport (10) pour le transport simultané de pièces à usiner (100) et d'ouvriers (16), dans lequel le véhicule (100) présente
a) un logement de pièce à usiner (104),
b) une plate-forme de montage (100) pouvant être parcourue par des ouvriers (16),
c) un entraînement propre qui est configuré pour entraîner le véhicule (100) indépendamment d'autres véhicules (100') du système de transport (10),
d) un capteur de voie sans contact 114 pour la surveillance de la situation de conduite du véhicule 100 au sein d'une distance de sécurité (120) et
e) un dispositif de commande (112) pour la commande de l'entraînement entre autres en fonction d'un signal du capteur de voie (114),
**caractérisé en ce que**
f) le véhicule (100) présente un capteur de plate-forme sans contact (128, 129) pour la surveillance de la plate-forme de montage (110), dans lequel le capteur de plate-forme (128, 129) est configuré pour prendre en charge au moins temporairement en alternance la surveillance de la situation de conduite du véhicule (100) ou pour soutenir au moins temporairement en outre la surveillance de la situation de conduite du véhicule (100).

2. Véhicule selon la revendication 1, dans lequel la prise en charge ou le soutien s'effectue en cas de dépassement par le bas de la distance de sécurité (120).

3. Véhicule selon une des revendications précédentes, dans lequel la surveillance de la situation de conduite comprend un évitement de collision, notamment pour la protection des personnes.

4. Véhicule selon une des revendications précédentes, dans lequel le capteur de plate-forme (128, 129) est configuré pour adapter sa portée dynamiquement ou progressivement.

5. Véhicule selon une des revendications précédentes, dans lequel le capteur de voie (118, 119) et le capteur de plate-forme (128, 129) fonctionnent à l'horizontale.

6. Véhicule selon une des revendications précédentes, dans lequel l'espace de détection du capteur de plate-forme (128, 129) peut être configuré de sorte qu'il dépasse la plate-forme de montage (110) d'une distance de sécurité (120).

7. Véhicule selon une des revendications précédentes, dans lequel le capteur de plate-forme (128, 129) couvre une région au-dessus du capteur de voie (118, 119).

8. Système de transport (10) avec au moins deux véhicules (100, 101) selon une des revendications précédentes.

9. Procédé de commande d'un véhicule avec un logement de pièce à usiner, une plate-forme de montage pouvant être parcourue par des ouvriers, un entraînement propre qui est configuré pour entraîner le véhicule indépendamment d'autres véhicules du système de transport, un capteur de voie sans contact pour la surveillance de la situation de conduite du véhicule au sein d'une distance de sécurité, un dispositif de commande pour la commande de l'entraînement entre autres en fonction d'un signal du capteur de voie et un capteur de plate-forme sans contact pour la surveillance de la plate-forme de montage, avec les étapes :
surveillance de la situation de conduite du véhicule avec le capteur de voie ;
approchement d'un second véhicule pour une formation de groupe, éloignement d'un second véhicule pour un détachement d'un groupe ou approchement du véhicule d'un contour d'interférence mobile ou stationnaire ;
dès que la distance de sécurité au second véhicule ou contour d'interférence est dépassée par le bas ou tant que le second véhicule ou le contour d'interférence se trouve au sein de la distance de sécurité, réalisation en alternance ou en outre d'une surveillance de la situation de conduite avec le capteur de plate-forme.

10. Procédé selon la revendication 9, dans lequel la surveillance de la situation de conduite comprend un évitement de collision, notamment pour une protection des personnes.

11. Procédé selon la revendication 9 ou 10, dans lequel le capteur de plate-forme adapte sa portée dynamiquement ou progressivement pendant un approchement ou un éloignement.

12. Procédé selon une des revendications 9 à 11, dans lequel le capteur de voie prend en charge la régulation de distance à un second véhicule dans un groupe.

13. Procédé selon une des revendications 9 à 12, dans lequel le capteur de plate-forme prend en charge la surveillance de la plate-forme de montage ainsi que d'une région d'amarrage au second véhicule.

14. Procédé selon une des revendications 9 à 13, dans lequel la région détectée par le capteur de voie ou/et le capteur de plate-forme dépend de la vitesse de déplacement actuelle, de la position, de l'état de charge d'un des véhicules ou/et de la distance à un autre véhicule.
